Europäisches Patentamt

European Patent Office

Office européen des brevets

(19)

(11) Veröffentlichungsnummer : **0 332 835 B1**

(12)

# EUROPÄISCHE PATENTSCHRIFT

(45) Veröffentlichungstag der Patentschrift :
**22.04.92 Patentblatt 92/17**

(51) Int. Cl.$^5$ : **A01D 78/12, A01D 80/00**

(21) Anmeldenummer : **89101980.4**

(22) Anmeldetag : **04.02.89**

---

(54) **Kreiselheuer.**

---

(30) Priorität : **17.03.88 DE 3808931**

(43) Veröffentlichungstag der Anmeldung :
**20.09.89 Patentblatt 89/38**

(45) Bekanntmachung des Hinweises auf die
Patenterteilung :
**22.04.92 Patentblatt 92/17**

(84) Benannte Vertragsstaaten :
**AT BE CH DE FR GB IT LI LU NL SE**

(56) Entgegenhaltungen :
**CH-A- 477 807**
**DE-A- 2 833 814**
**DE-B- 2 002 746**
**FR-A- 2 146 674**

(73) Patentinhaber : **CLAAS SAULGAU GMBH**
**Postfach 1154**
**W-7968 Saulgau (DE)**

(72) Erfinder : **Gebele, Josef**
**Hüttenreute**
**W-7961 Hosskirch (DE)**
Erfinder : **Geng, Manfred**
**Bergstrasse 7**
**W-7968 Saulgau-Bogenweiler (DE)**
Erfinder : **Moosbrucker, Karl**
**Sonnenhalde 21**
**W-7968 Saulgau (DE)**

EP 0 332 835 B1

**Beschreibung**

Die Erfindung bezieht sich auf einen Kreiselheuer wie beispielsweise Kreiselschwader nach dem Oberbegriff des Hauptanspruches. Kreiselheuer dieser Art sind zum Beispiel aus der Deutschen Patentschrift 32 23 768 bekannt. Das zweirädrige Fahrwerk solcher Maschinen dient dazu, diese in der Betriebsstellung gegenüber dem Boden abzustützen und die Arbeitswerkzeuge in gleichmäßigem, geringem Abstand über den Boden zu führen. Wenn eines der Laufräder über eine örtliche Bodenunebenheit läuft, überträgt sich seine Höhenbewegung verstärkt auf die seitlich von ihm befindlichen Arbeitswerkzeuge. Diese heben sich dabei stärker vom Boden ab, als es der Bodenunebenheit entspricht. Beim Durchfahren einer Mulde tritt der gegenteilige Effekt ein und die Arbeitswerkzeuge dringen in den Boden ein.

Der gleiche Nachteil ist auch bei einer Kreiselheumaschine mit einem dreirädrigen Fahrwerk gegeben, wie sie beispielsweise in der DE-OS 28 33 814 beschrieben ist. Bei dieser bekannten Ausführung sind zwei hintere Laufräder an einer Stützradschwinge und ein vorderes Laufrad an einer zweiten Stützradschwinge angeordnet. Die Stützradschwingen sind am Rahmen der Maschine drehbar gelagert und über eine gemeinsame Verstellspindel in Höhenrichtung schwenk- und feststellbar. Bei der Arbeit sind die Laufräder in Höhenrichtung unbeweglich gegenüber dem Zinkenkreisel.

Den Nachteil schlechter Bodenanpassung zu vermeiden und die Maschine auch bei hoher Fahrgeschwindigkeit ruhig und damit stoßfrei auch über unebenen Boden zu führen, ist die Aufgabe dieser Erfindung. Dieses Ziel wird dadurch erreicht, daß das Fahrwerk des Kreiselheuers jeweils ein vorderes und ein hinteres Paar Laufräder besitzt, von denen die zwei das vordere Paar bildenden Laufräder an den vorderen Enden und die zwei das hintere Paar bildenden Laufräder an den hinteren Enden von einem Paar Doppelschwingen angeordnet sind, die jede um eine horizontal und quer zur Fahrtrichtung im Bereich zwischen vorderem und hinterem Laufrad liegende Achse pendelbar gelagert ist. Wenn jetzt zum Beispiel ein vorderes Laufrad über eine örtliche Bodenunebenheit rollt, dann hebt sich eine Fahrwerkshälfte nur etwa um den halben Betrag der Bodenunebenheit. Da sich, wie bei den bekannten Maschinen, die Arbeitswerkzeuge etwa doppelt so hoch anheben, als eine Fahrwerkshälfte, folgen die Spitzen der Arbeitswerkzeuge einer Bodenunebenheit nunmehr fast genau.

In den Ansprüchen 1 - 4 werden räumlich und kostenmäßig besonders günstige Ausführungsformen beansprucht.

In der Kurvenfahrt müssen in unterschiedlichem bestand zur Schwenkachse der Maschine starr angeordnete Räder zwangsläufig einen Schlupf zum Boden haben. Besonders bei kurzem Maschinenrahmen kann es deshalb zweckmäßig sein, zwei der Laufräder als Nachlaufräder auszubilden. Wenn alle vier Laufräder nachlaufen können, sind sie auch bei einer starr mit einem Schlepper verbundenen Maschine verwendbar, ohne ihre anderen Vorteile zu verlieren.

In Anspruch 8 wird eine Ausführung beansprucht, die insbesondere für den Straßentransport vorteilhaft ist.

Zwei Ausführungsbeispiele werden nachstehend beschrieben und durch vier Abbildungen erläutert.

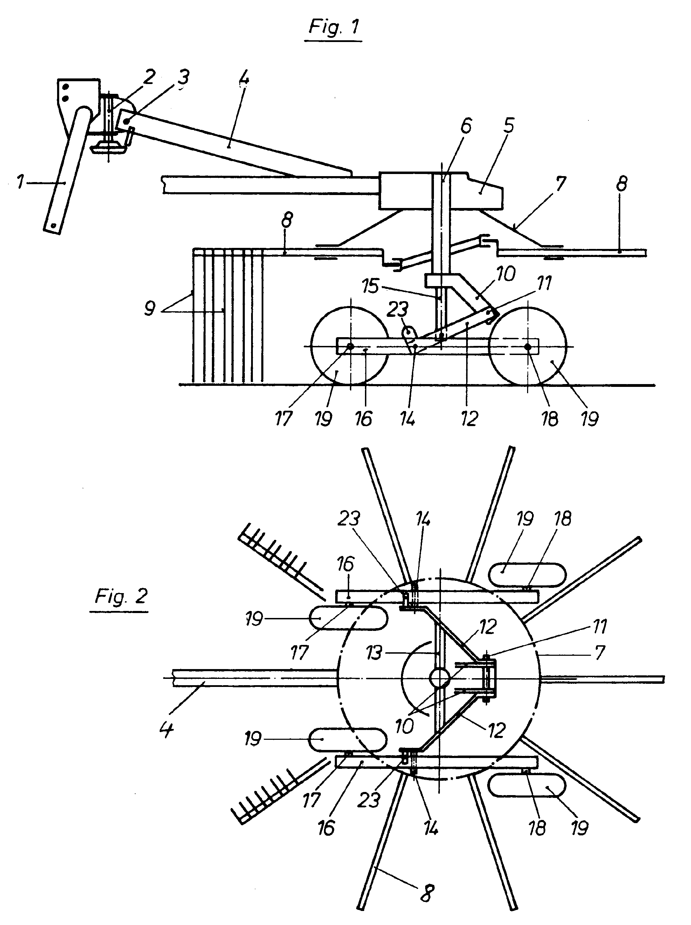

Fig. 1: zeigt einen Kreiselheuer von der Seite,

Fig. 2: zeigt den gleichen Gegenstand von oben,

Fig. 3: zeigt eine andere Ausführung für das Fahrwerk eines Kreiselheuers von der Seite,

Fig. 4: den gleichen Gegenstand von oben.

An einem Dreipunktrahmen (1) ist um eine senkrechte Achse (2) und eine waagrechte Achse (3) ein Rahmen (4) eines Kreiselheuers schwenkbar angelenkt. Aus einem Getriebegehäuse (5) führt eine Tragachse (6) nach unten. Aus ihr ist ein Arbeitskreisel dreh- und antreibbar gelagert, der aus einem Teller (7), Zinkenarmen (8) und Rechenzinken (9) besteht.

Am unteren Ende der Tragachse (6) ist ein Radträger (10) befestigt, der an seinem freien Ende eine horizontale Schwenkachse (11) aufnimmt. An der Schwenkachse (11) sind Z-förmige Schwingen (12) drehbar gelagert, die ihrerseits durch eine Querstrebe (13) starr miteinander verbunden sind. Die Schwingen (12) haben an ihrem freien Ende waagrechte Lagerbolzen (14). Auf die Querstrebe (13) wirkt ein Druckstab (15) ein, der die Tragachse (6) durchsetzt und der durch nicht dargestellte Mittel Höhenverstellung der Maschine nach oben oder unten bewegt werden kann.

An den Lagerbolzen (14) sind Doppelschwingen (16) schwenkbar gelagert. Sie haben an ihrem vorderen Ende nach innen gerichtete Achszapfen (17) und an ihrem hinteren Ende nach außen gerichtete Achszapfen (18). Auf ihnen sind Laufräder (19) gelagert. Der Ausschlag der Doppelschwingen (16) wird durch Anschläge (23) begrenzt, die fest mit den Schwingen (12) verbunden sind.

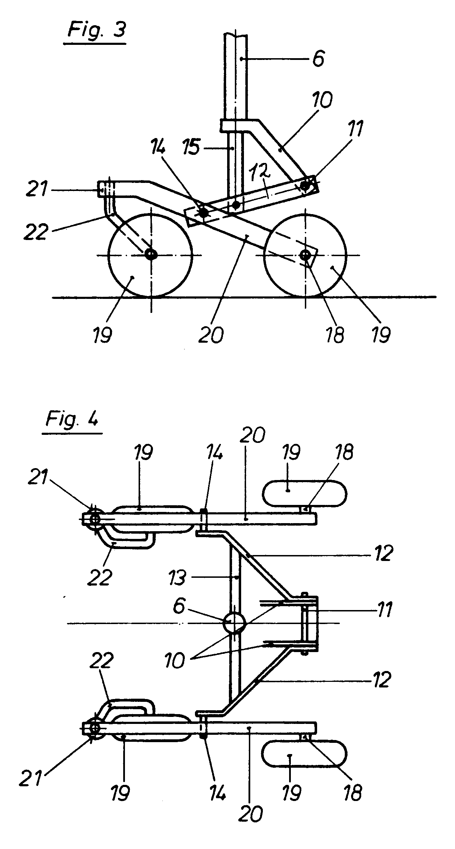

Bei einer anderen Ausführungsform (Fig. 3 und 4) sind die Doppelschwingen (20) zur Aufnahme von je einem starren Laufrad (19) und einen Nachlaufrad (19, 22) ausgerüstet.

Die an Lagerbolzen (14) gelagerten schrägen Doppelschwingen (20) tragen an ihrem hinteren Ende Achszapfen (18), auf denen Laufräder (19) gelagert sind. An ihrem vorderen Ende haben sie ein Kopflager (21)

2

mit einer senkrechten Bohrung. Die Kopflager (21) werden von einer gekrümmten Nachlaufachse (22) durchsetzt, die ihrerseits auf einem waagrechten Ende ein Laufrad (19) trägt.

Zum Betrieb werden mittels des Druckstabes (15) die Schwingen (12) und mit ihnen die Doppelschwingen (16, 20) so weit abgesenkt, daß die Enden der Rechzinken (9) dicht über dem Boden umlaufen. Wenn eines der Laufräder (19) über eine Bodenunebenheit läuft, wird die zugehörige Doppelschwinge (16, 20) angehoben und der zugehörige waagrechte Lagerbolzen (14) hebt sich um etwa die Hälfte der Höhe der Bodenunebenheit an. Da die Rechzinken (9) ihrerseits außerhalb der Radspur liegen, heben sie sich um etwa den Betrag der Bodenunebenheit an und behalten so ihren relativen Abstand zum Boden.

## Patentansprüche

1. Kreiselheuer wie Kreiselschwader mit mindestens einem, um eine etwa senkrechte Achse (6) umlaufenden Arbeitswerkzeug (7, 8, 9) und einem darunter angeordneten Fahrwerk, dadurch gekennzeichnet, daß das Fahrwerk jeweils ein vorderes und ein hinteres Paar Laufräder (19) besitzt, von denen die zwei das vordere Paar bildenden Laufräder (19) an den vorderen Enden und die zwei das hintere Paar bildenden Laufräder (19) an den hinteren Enden von einem Paar Doppelschwingen (16, 20) angeordnet sind, die jede um eine horizontal und quer zur Fahrtrichtung im Bereich zwischen vorderem und hinterem Laufrad (19) liegende Achse (14) pendelbar gelagert ist.

2. Kreiselheuer nach Anspruch 1, dadurch gekennzeichnet, daß von den Laufrädern (19) jeweils eines an der Innenseite des einen Endes und eines an der Außenseite des anderen Endes jeder Doppelschwinge (16) angeordnet ist.

3. Kreiselheuer nach Anspruch 2, dadurch gekennzeichnet, daß die in Fahrtrichtung vorderen Laufräder (19) an der Innenseite des vorderen Endes jeder Doppelschwinge (16) angeordnet sind.

4. Kreiselheuer nach einem der Ansprüche 1 - 3, dadurch gekennzeichnet, daß die Laufräder (19) an starr mit den Doppelschwingen (16) verbundenen horizontal ausgerichteten Achszapfen (17, 18) gelagert sind.

5. Kreiselheuer nach Anspruch 1, dadurch gekennzeichnet, daß ein Paar der Laufräder (19) an starr mit den Doppelschwingen (20) verbundenen und horizontal ausgerichteten Achszapfen (18) gelagert ist, während das zweite Paar der Laufräder (19) als sogenannte Nachlaufräder (19, 22) um eine etwa senkrechte Achse schwenkbar mit den Doppelschwingen (20) verbunden ausgeführt ist.

6. Kreiselheuer nach Anspruch 5, dadurch gekennzeichnet, daß die Nachlaufräder (19, 22) in Fahrtrichtung vor den starr angeordneten Laufrädern (19) angeordnet sind.

7. Kreiselheuer nach Anspruch 1, dadurch gekennzeichnet, daß alle Laufräder als Nachlaufräder (19, 22) ausgeführt sind.

8. Kreiselheuer nach einem der Ansprüche 1 - 7, dadurch gekennzeichnet, daß der Pendelweg der Doppelschwingen (16, 20) durch Anschläge (23) begrenzt ist.

## Claims

1. A rotary hay-making machine such as a rotary windrower having at least one working implement (7, 8, 9) which rotates about a substantially vertical axis (6), and a chassis disposed beneath the implement, characterised in that the chassis has front and rear pairs of wheels (19) of which the two wheels (19) forming the front pair are arranged at the front ends of a pair of double rocking arms (16, 20) and the two wheels (19) forming the rear pair are arranged at the rear ends of the pair of double rocking arms, the rocking arms each being mounted swingably about an axis (14) which is disposed horizontally and transversely to the direction of travel in the region between the front and rear wheels (19).

2. A rotary hay-making machine according to claim 1 characterised in that of the wheels (19) a respective one is disposed at the inside of the one end of each double rocking arm (16) and one is disposed at the outside of the other end of the double rocking arm.

3. A rotary hay-making machine according to claim 2 characterised in that the wheels (19) which are at the front in the direction of travel are disposed at the inside of the front end of each double rocking arm (16).

4. A rotary hay -making machine according to one of claims 1 to 3 characterised in that the wheels (19) are mounted on horizontally aligned stub axles (17, 18) rigidly connected to the double rocking arms (16).

5. A rotary hay-making machine according to claim 1 characterised in that one pair of the wheels (19) is mounted on horizontally aligned stub axles (18) rigidly connected to the double rocking arms (20) while the second pair of wheels (19), as so-called trailing wheels (19, 22), is connected to the double rocking arms (20) pivotably about a substantially vertical axis.

6. A rotary hay-making machine according to claim 5 characterised in that the trailing wheels (19, 20) are arranged in the direction of travel in front of the rigidly arranged wheels (19).

7. A rotary hay-making machine according to claim 1 characterised in that all wheels are in the form of trailing wheels (19, 22).

8. A rotary hay-making machine according to one of claims 1 to 7 characterised in that the swinging movement of the double rocking arms (16, 20) is limited by stops (23).


**Revendications**

1. Faneuse rotative telle qu'une andaineuse rotative comprenant au moins un outil de travail (7, 8, 9) tournant autour d'un axe (6) sensiblement vertical et un dispositif de roulement disposé au-dessous, caractérisée en ce que le dispositif de roulement comprend une paire de roues avant et une paire de roues arrière respectives (19), les deux roues (19) formant la paire avant étant montées aux extrémités avant et les deux roues (19) formant la paire arrière étant montées aux extrémités arrière d'une paire de doubles bielles oscillantes (16, 20) qui sont chacune montées de façon pendulaire sur un axe (14) horizontal et transversal à la direction de la marche dans la région située entre les roues avant et arrière (19).

2. Faneuse rotative selon la revendication 1, caractérisée en ce que l'une des roues (19) est disposée sur le côté interne d'une extrémité de chaque double bielle oscillante (16) et l'autre sur le côté externe de son autre extrémité.

3. Faneuse rotative selon la revendication 2, caractérisée en ce que dans la direction de la marche, les roues avant (19) sont montées sur le côté interne de l'extrémité avant de chaque double bielle oscillante (16).

4. Faneuse rotative selon l'une quelconque des revendications 1 à 3, caractérisée en ce que les roues (19) sont montées sur des tronçons d'axe (17, 18) orientés horizontalement et reliés rigidement aux doubles bielles oscillantes (16).

5. Faneuse rotative selon la revendication 1, caractérisée en ce qu'une paire de roues (19) est reliée rigidement aux doubles bielles oscillantes (20) et est montée sur un tronçon d'axe (18) orienté horizontalement, alors que la seconde paire de roues (19) est constituée sous la forme dite de roues menées (19, 22) qui sont reliées aux doubles bielles oscillantes (20) en pouvant pivoter autour d'un axe sensiblement vertical.

6. Faneuse rotative selon la revendication 5, caractérisée en ce que les roues menées (19, 22) sont disposées en direction de la marche à l'avant des roues (19) montées rigidement.

7. Faneuse rotative selon la revendication 1, caractérisée en ce que toutes les roues sont constituées sous forme de roues menées (19, 22).

8. Faneuse rotative selon l'une quelconque des revendications 1 à 7, caractérisée en ce que le parcours pendulaire des doubles bielles oscillantes (16, 20) est limité par des butées (23).

EP 0 332 835 B1

*Fig. 1*

*Fig. 2*

Fig. 3

Fig. 4